# EUROPÄISCHE PATENTSCHRIFT

(11) **EP 3 027 483 B1**
(45) Veröffentlichungstag und Bekanntmachung des Hinweises auf die Patenterteilung: **13.05.2020**
(21) Anmeldenummer: 14761976.1
(22) Anmeldetag: 04.09.2014
(51) Int. Cl.: G06F 21/57, G06F 21/74, B61L 27/00, G05B 9/00, G06F 11/07, G06F 11/16, B61L 15/00, H04L 1/22, H04L 29/08, H04L 29/06

(54) **SOFTWARE AKTUALISIERUNG VON NON-KRITISCHEN KOMPONENTEN IN DUAL SICHERHEITSKRITISCHEN VERTEILTEN SYSTEMEN**
SOFTWARE UPDATES OF NON-CRITICAL COMPONENTS IN DUAL SAFETY-CRITICAL DISTRIBUTED SYSTEMS
MISES À JOUR LOGICIELLES DE COMPOSANTS NON CRITIQUES DANS DES SYSTÈMES DISTRIBUÉS DUAL DE SÉCURITÉ CRITIQUE

(30) Priorität: 19.09.2013 DE 102013218814
(43) Veröffentlichungstag der Anmeldung: 08.06.2016
(73) Patentinhaber: Siemens Mobility GmbH, 81739 München (DE)
(72) Erfinder: BRABAND, Jens, 38106 Braunschweig (DE)
(86) Internationale Anmeldenummer: PCT/EP2014/068843
(87) Internationale Veröffentlichungsnummer: WO 2015/039878

(56) Entgegenhaltungen:
- WO-A1-03/047937
- DE-A1- 3 938 501
- DE-A1- 10 332 700
- DE-A1-102005 023 296
- DE-A1-102009 019 089
- DE-A1-102011 086 530

## Beschreibung

Es hat sich als sehr schwierig bzw. nahezu unmöglich herausgestellt, Dateneinrichtungen, wie beispielsweise PersonalComputer, so zu betreiben, dass sie ohne feststellbare Sicherheitslücken betreibbar sind. Daraus folgen besondere Probleme, wenn Dateneinrichtungen zu einem sicherheitskritischen, mit sicherheitsrelevanter und nicht-sicherheitsrelevanter Software ausgestattetem System gehören, das vor seinem Einsatz typgeprüft und - beispielsweise bei einem Zugsicherungssystem oder einer Bedieneinrichtung eines Stellwerkssystems - in einer aufwändigen Prozedur zugelassen werden muss. Danach darf die Software nicht mehr geändert werden. Dies wird nach dem Stand der Technik sogar automatisch überwacht und solche Systeme stellen sich nach festgestellten Veränderungen automatisch ab. Ergibt sich nach der Prüfung und Zulassung eines solchen Systems die Notwendigkeit, nicht-sicherheitsrelevante Software in ein solches System durch ein Update bzw. Patches einzubringen, dann muss entweder auf eine zugelassene, eindeutig identifizierbare Software zurück gegriffen werden, oder es muss eine erneute Prüfung zur Zulassung vorgenommen werden.

Aus der Druckschrift WO 03/047937 A1 ist ein Verfahren zum Steuern eines sicherheitskritischen Bahnbetriebsprozesses bekannt. Zur Durchführung dieses Verfahrens dient eine Einrichtung mit einem signaltechnisch sicheren Rechner, in dem eine Systemsoftware implementiert ist, und mit nicht signaltechnisch sicheren kommerziellen Rechnern, in denen bahnverwaltungsspezifische Software implementiert ist. Dabei sind der sichere Rechner und die kommerziellen Rechner an ein Kommunikationssystem angeschlossen, über das der sichere Rechner Verarbeitungsaufträge an die kommerziellen Rechner übermittelt und von dort Ergebnisse und/oder Zwischenergebnisse erhält. Die kommerziellen Rechner sind dazu eingerichtet, jeden Verarbeitungsauftrag mindestens zweimal unabhängig voneinander auszuführen. Der sichere Rechner prüft die ihm von den kommerziellen Rechnern mindestens jeweils paarweise übermittelten Ergebnisse und/oder Zwischenergebnisse signaltechnisch sicher auf inhaltliche Übereinstimmung, leitet in Abhängigkeit vom Prüfergebnis daraus Stellbefehle für Prozesselemente ab und veranlasst ihre Ausgabe an den Prozess über dafür vorgesehene Treiber. Auf Seiten der kommerziellen Rechner sind Prüfmechanismen für die Plausibilität von Signaturen der von ihnen erarbeiteten Ausgaben vorgesehen. Diese Prüfmechanismen sind signaltechnisch nicht sicher ausgeführt. Auf Seiten des signaltechnisch sicheren Rechners hingegen sind signaltechnisch sicher ausgeführte Prüfmechanismen vorgesehen.

Der Erfindung liegt die Aufgabe zugrunde, ein Verfahren zum Betreiben eines sicherheitskritischen Systems anzugeben, mit dem sich das System mit vergleichsweise geringem Aufwand aktualisieren lässt.

Zur Lösung dieser Aufgabe ist erfindungsgemäß geeignet ein Verfahren zum Betreiben eines sicherheitskritischen Systems mit mindestens einer ersten Dateneinrichtung mit einer zugelassenen, sicherheitsrelevanten Software und mit mindestens einer Referenz-Dateneinrichtung mit derselben zugelassenen, sicherheitsrelevanten Software, bei dem
nach einer Typprüfung des Systems die mindestens eine erste Dateneinrichtung mit mindestens einer nicht-sicherheitsrelevanten Zusatz-Software ausgestattet wird und die mindestens eine Referenz-Dateneinrichtung für Software-Modifizierungen gesperrt wird und nach wie vor nur mit der sicherheitsrelevanten Software ausgerüstet ist; vor Ausgabe einer sicherungstechnischen Dateninformation werden mittels einer Vergleichseinrichtung die Ausgangsinformationen der mindestens einen ersten Dateneinrichtung und der mindestens einen Referenz-Dateneinrichtung auf Übereinstimmung hinsichtlich der sicherheitsrelevanten Software überprüft und es wird nur bei einer Übereinstimmung die sicherungstechnische Dateninformation ausgegeben.

Ein wesentlicher Vorteil des erfindungsgemäßen Verfahrens besteht darin, dass es die Möglichkeit bietet, in das sicherheitskritische System nachträglich, d.h. nach Zulassung, nicht-sicherheitsrelevante Software zu aktualisieren bzw. zu ergänzen, ohne das anschließend eine erneute Typprüfung mit erneuter Zulassung erfolgen muss.

Zur Gewährleistung der Sicherheit ist es bei einem System mit mehreren ersten Dateneinrichtungen und mehreren Referenz-Dateneinrichtungen besonders vorteilhaft, sicherungstechnische Dateninformationen erst dann auszugeben, wenn eine Überprüfung der Ausgangsinformationen der ersten Dateneinrichtungen und der Referenz-Dateneinrichtungen hinsichtlich der sicherheitsrelevanten Software ergeben hat, dass eine Übereinstimmung jeweils hinsichtlich einer qualifizierten Mehrheit der ersten Dateneinrichtungen und der Referenz-Dateneinrichtungen vorliegt.

Das erfindungsgemäße Verfahren bietet die vorteilhafte Möglichkeit, als Zusatz-Software eine Datenschutz-Software zu verwenden, bei der es sich insbesondere um Viren- oder generell Malware-Schutzsoftware handeln kann.

Ferner erlaubt das erfindungsgemäße Verfahren vorteilhafterweise, als Zusatz-Software eine externe Software einzusetzen, worunter beispielsweise eine handelsübliche Software, eine vom Entwickler des sicherheitskritischen Systems nicht selbst entwickelte Software oder eine ungeprüfte Software zu verstehen ist.

Hinsichtlich der Art der nicht-sicherheitsrelevanten Software unterliegt das erfindungsgemäße Verfahren somit keinen Einschränkungen.

Bei einer besonders vorteilhaften Ausführungsform des erfindungsgemäßen Verfahrens wird vor der Typprüfung die mindestens eine erste Dateneinrichtung mit mindestens einer nicht-sicherheitsrelevanten Zusatz-Software in der Weise ausgestattet, dass Programm und Daten voneinander separiert sind, wobei als Daten Testdaten mit einem Code verwendet werden; nach der Typprüfung wird die mindestens eine erste Dateneinrichtung in demselben Programm mit aktuellen Daten unter Heranziehen des Codes nach Überprüfen der Gültigkeit der aktuellen Daten versehen wird. Bei dem Code kann es sich um eine Signatur handeln. Diese Ausführungsform des erfindungsgemäßen Verfahrens zeichnet sich dadurch aus, dass mit großer Sicherheit durch eine Aktualisierung der Zusatz-Software Störungen des sicherheitskritischen Systems vermieden werden.

Diese Ausführungsform des erfindungsgemäßen Verfahrens kann auch losgelöst von einem sicherheitskritischen System mit mindestens einer ersten Dateneinrichtung mit einer zugelassenen, sicherheitsrelevanten Software und mit mindestens einer Referenz-Dateneinrichtung mit derselben zugelassenen, sicherheitsrelevanten Software eingesetzt werden, also auch bei einem sicherheitskritischen System mit einer Dateneinrichtung im Sinne der oben angesprochenen ersten Dateneinrichtung bzw. mit mehreren Dateneinrichtungen.

Zur störungsfreien Aktualisierung der Zusatz-Software trägt in vorteilhafter Weise auch bei, wenn
bei einer Datenschutz-Software als Zusatz-Software sichergestellt wird, dass die Funktionalität des Programms von den Daten unbeeinflussbar ist.

In demselben Zusammenhang ist es vorteilhaft, bei einem Einsatz der Zusatz-Software die Gültigkeit des Codes der Daten dieser Zusatz-Software mittels der sicherheitsrelevanten Software zu überprüfen.

Bei dem sicherheitskritischen System kann es sich um Systeme sehr verschiedener Art handeln, unter anderem um Zugsicherungssysteme oder Bediensysteme für Stellwerke. Besonders vorteilhaft erscheint es, wenn als sicherungskritisches System ein Zugsicherungssystem und als die mindestens eine erste Dateneinrichtung ein Betriebsrechner verwendet wird sowie als Vergleichseinrichtung ein Stellwerk benutzt wird.

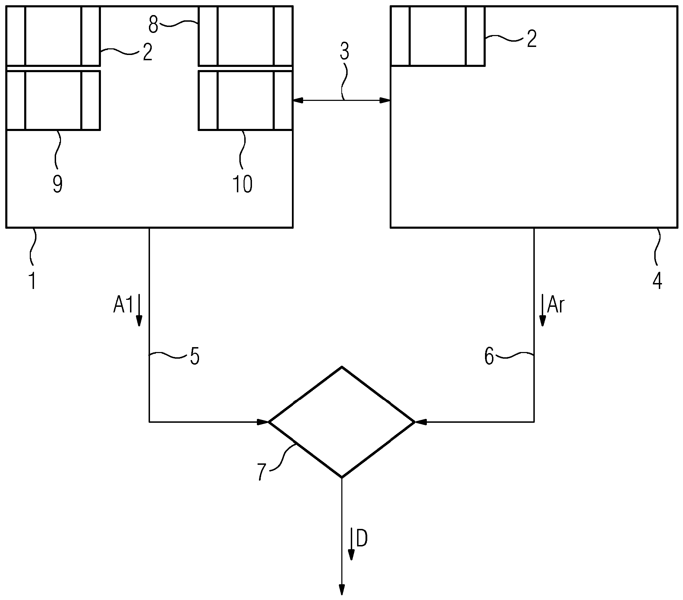

Zur weiteren Erläuterung der Erfindung ist in der Figur schematisch eine Anordnung mit einer ersten Dateneinrichtung und einer Referenz-Dateneinrichtung dargestellt.

Die Figur zeigt eine erste Dateneinrichtung 1, bei der es sich um einen Betriebsrechner eines Zugsicherungssystems handeln kann. Die erste Dateneinrichtung 1 enthält eine zugelassene, sicherheitsrelevante Software 2. Mit der einen ersten Dateneinrichtung 1 ist über eine Datenverbindung 3 eine Referenz-Dateneinrichtung 4 verbunden, die ebenfalls mit der zugelassenen, sicherheitsrelevanten Software 2 ausgestattet ist.

Die eine erste Dateneinrichtung 1 ist über einen Datenkanal 5 und die Referenz-Dateneinrichtung 4 über einen weiteren Datenkanal 6 mit einer Vergleichseinrichtung 7 verbunden, deren Funktion bei einem Zugsicherungssystem von einem nicht dargestellten Stellwerk oder einem anderen sicherheitsgerichteten Vergleicher übernommen wird.

Es wird zur weiteren Beschreibung des erfindungsgemäßen Verfahrens angenommen, dass die eben beschriebene Anordnung in diesem Zustand einer Typprüfung und einer Zulassung unterzogen worden ist. Wird danach diese Anordnung beispielsweise mit einer Zusatz-Software 8 in Form eines Viren-Schutzprogramms ausgestattet, dann wird gleichzeitig die Referenz-Dateneinrichtung 4 für Software-Modifizierungen gesperrt; sie ist nach wie vor nur mit der sicherheitsrelevanten Software 2 ausgerüstet.

Soll von der Vergleichseinrichtung 7 eine sicherungstechnische Dateninformation D ausgegeben werden, dann werden vorher Ausgangsinformationen A1 und Ar der einen ersten Dateneinrichtung und der Referenz-Dateneinrichtung 4 von der Vergleichseinrichtung 7 erfasst; es werden diese Ausgangsinformationen A1 und Ar hinsichtlich der sicherheitsrelevanten Software 2 überprüft, und es wird die sicherungstechnische Dateninformation D ausgegeben, wenn die sicherheitsrelevante Software 2 übereinstimmt.

Außer der nicht-relevanten Zusatz-Software 8 kann die eine erste Dateneinrichtung auch mit einer weiteren nicht-sicherheitsrelevanten Zusatz-Software 9 versehen sein , die im Falle eines Zugsicherungssystems beispielsweise eine beliebige Software zur Videoüberwachung einer Bahnhofanlage sein kann, oder mit einer zusätzlichen Zusatz-Software 10, die eine Software für Bahnübergangsüberwachungsanlage darstellen kann.

Dabei kann in nicht gezeigter Weise die eine erste Dateneinrichtung 1 in der Weise mit der jeweiligen Zusatz-Software 8, 9 und 10 ausgestattet werden, dass jeweils das Programm und die dazu gehörenden Daten separiert sind. Vor der Typprüfung bzw. Zulassung sind die jeweiligen Programme mit Testdaten und einem Code in der einen ersten Dateneinrichtung 1 gespeichert. Entsprechendes gilt selbstverständlich für die sicherheitsrelevante Software 2 hinsichtlich der einen ersten Dateneinrichtung 1 und der Referenz-Dateneinrichtung 4.

Soll nach der Typprüfung die eine erste Dateneinrichtung hinsichtlich beispielsweise der Zusatz-Software 8 aktualisiert werden, dann wird die eine erste Dateneinrichtung 1 mit aktuellen Daten zu dieser Software versehen. Dabei wird der Code auf einem vom Transfer der aktuellen Daten unabhängigen Weg herangezogen und auf Übereinstimmung überprüft. Auch die Gültigkeit der aktuellen Daten wird überprüft. Dabei wird sichergestellt, dass die Daten der Zusatz-Software nicht die Funktionalität des Programms der Zusatz-Software verändern können.

Auch Dabei kann die Aktualisierung der Zusatz-Software erfolgen, solange sichergestellt ist, dass die Aktualisierung nicht die oben beschriebenen Sicherheitsmechanismen aushebeln kann, insbesondere, wenn eine Beeinflussung der Referenz-Einrichtung 4 über die Datenverbindung 3 ausgeschlossen werden kann.

## Patentansprüche

1. Verfahren zum Betreiben eines sicherheitskritischen Systems mit mindestens einer ersten Dateneinrichtung (1) mit einer zugelassenen, sicherheitsrelevanten Software (2) und mit mindestens einer Referenz-Dateneinrichtung (4) mit derselben zugelassenen, sicherheitsrelevanten Software (2), bei dem nach einer Typprüfung des Systems die mindestens eine erste Dateneinrichtung (1) mit mindestens einer nicht-sicherheitsrelevanten Zusatz-Software (8,9,10) ausgestattet wird und die mindestens eine Referenz-Dateneinrichtung (4) für Software-Modifizierungen gesperrt wird und nach wie vor nur mit der sicherheitsrelevanten Software (2) ausgerüstet ist,
vor Ausgabe einer sicherungstechnischen Dateninformation (D) mittels einer Vergleichseinrichtung (7) Ausgangsinformationen (A1,Ar) der mindestens einen ersten Dateneinrichtung (1) und der mindestens einen Referenz-Dateneinrichtung (4) auf Übereinstimmung hinsichtlich der sicherheitsrelevanten Software (2) überprüft werden und
bei einer Übereinstimmung die sicherungstechnische Dateninformation (D) heraus gegeben wird.

2. Verfahren nach Anspruch 1,
**dadurch gekennzeichnet, dass**
bei mehreren ersten Dateneinrichtungen und mehreren Referenz-Dateneinrichtungen sicherungstechnische Dateninformationen heraus gegeben werden, wenn eine Überprüfung der Ausgangsinformationen der ersten Dateneinrichtungen und der Referenz-Dateneinrichtungen hinsichtlich der sicherheitsrelevanten Software ergeben hat, dass eine Übereinstimmung jeweils hinsichtlich einer qualifizierten Mehrheit der ersten Dateneinrichtungen und der Referenz-Dateneinrichtungen vorliegt.

3. Verfahren nach Anspruch 1 oder 2,
**dadurch gekennzeichnet, dass**
als Zusatz-Software eine Datenschutz-Software (8) verwendet wird.

4. Verfahren nach einem der vorangehenden Ansprüche,
**dadurch gekennzeichnet, dass**
als Zusatz-Software eine externe Software (9,10) verwendet wird.

5. Verfahren nach einem der vorangehenden Ansprüche,
**dadurch gekennzeichnet, dass**
vor der Typprüfung die mindestens eine erste Dateneinrichtung mit mindestens einer nicht-sicherheitsrelevanten Zusatz-Software in der Weise ausgestattet wird, dass Programm und Daten voneinander separiert sind, wobei als Daten Testdaten mit einem Code verwendet werden, und
nach der Typprüfung die mindestens eine erste Dateneinrichtung in demselben Programm mit aktuellen Daten unter Heranziehen des Codes nach Überprüfen der Gültigkeit der aktuellen Daten versehen wird.

6. Verfahren nach Anspruch 5,
**dadurch gekennzeichnet, dass**
bei einem Einsatz der Zusatz-Software die Gültigkeit des Codes der Daten dieser Zusatz-Software mittels der sicherheitsrelevanten Software überprüft wird.

7. Verfahren nach einem der Ansprüche 5 oder 6,
**dadurch gekennzeichnet, dass**
zur Aktualisierung der Zusatz-Software (8,9,10) die eine erste Dateneinrichtung (1) mit aktuellen Daten zu dieser Zusatz-Software unter Heranziehen des Codes auf einem vom Transfer der aktuellen Daten unabhängigen Weg versehen wird.

8. Verfahren nach einem der vorangehenden Ansprüche,
**dadurch gekennzeichnet, dass**
als sicherungskritisches System ein Zugsicherungssystem und als die mindestens eine erste Dateneinrichtung ein Betriebsrechner verwendet wird sowie als Vergleichseinrichtung ein Stellwerk benutzt wird.

## Claims

1. Method for operating a safety-critical system comprising at least one first data device (1) containing approved, safety-related software (2) and comprising at least one reference data device (4) containing the same approved, safety-related software (2), in which method
after the system has been type-tested, the at least one first data device (1) is provided with at least one piece of non safety-related add-on software (8, 9, 10), and the at least one reference data device (4) is blocked to software modifications and is still equipped solely with the safety-related software (2),
before an item of safety data information (D) is output, a comparator (7) is used to check output information (A1, Ar) from the at least one first data device (1) and from the at least one reference data device (4) for a match with regard to the safety-related software (2), and
the safety data information (D) is output if there is a match.

2. Method according to claim 1,
**characterised in that**
where there are a plurality of first data devices and a plurality of reference data devices, safety data information is output if a check of the output information from the first data devices and from the reference data devices with regard to the safety-related software has given the result that there is a match for each of a qualified majority of the first data devices and of the reference data devices.

3. Method according to claim 1 or 2,
**characterised in that**
data-protection software (8) is used as the add-on software.

4. Method according to one of the preceding claims,
**characterised in that**
external software (9, 10) is used as the add-on software.

5. Method according to one of the preceding claims,
**characterised in that**
prior to type-testing, the at least one first data device is provided with at least one non safety-related add-on software in the manner that program and data are separate from each other, wherein test data containing a code is used as the data, and
after type-testing, the at least one first data device is provided in the same program with up-to-date data using the code after checking the validity of the up-to-date data.

6. Method according to claim 5,
**characterised in that**
when the add-on software is used, the validity of the code of the data of this add-on software is checked by means of the safety-related software.

7. Method according to one of claims 5 or 6,
**characterised in that**
in order to update the add-on software (8, 9, 10), the first data device (1) is provided with up-to-date data for this add-on software using the code in a way that is independent of the transfer of the up-to-date data.

8. Method according to one of the preceding claims,
**characterised in that**
a train protection system is used as the safety-critical system, an operating computer is used as the at least one first data device, and an interlocking system is used as the comparator.

## Revendications

1. Procédé pour faire fonctionner un système critique du point de vue de la sécurité, comprenant au moins un premier dispositif (1) de données, ayant un logiciel (2) autorisé et pertinent du point de vue de la sécurité, et comprenant au moins un dispositif (4) de données de référence, ayant le même logiciel (2) autorisé et pertinent du point de vue de la sécurité, dans lequel, après un contrôle de type du système, on équipe le au moins un premier dispositif (1) de données d'au moins un logiciel (8, 9, 10) supplémentaire non-pertinent du point de vue de la sécurité et on verrouille pour des modifications de logiciel le au moins un dispositif (4) de données de référence et on l'équipe comme auparavant seulement du logiciel (2) pertinent du point de vue de la sécurité,
avant l'émission d'une information (D) de données en technique de sécurisation, on contrôle, au moyen d'un dispositif (7) de comparaison, des informations (A1, Ar) de sortie du au moins un premier dispositif (1) de données et du au moins un dispositif (4) de données de référence sur le point de savoir s'il y a coïncidence du logiciel (2) pertinent du point de vue de la sécurité et
s'il y a coïncidence, on émet l'information (D) de données en technique de sécurisation.

2. Procédé suivant la revendication 1,
**caractérisé en ce que**
s'il y a plusieurs premiers dispositifs de données et plusieurs dispositifs de données de référence, on émet des informations de données en technique de sécurisation, si un contrôle des informations de sortie des premiers dispositifs de données et des dispositifs de données de référence en ce qui concerne les logiciels pertinents du point de vue de la sécurité a donné qu'il y a une coïncidence respectivement en ce qui concerne une majorité qualifiée des premiers dispositifs de données et des dispositifs de données de référence.

3. Procédé suivant la revendication 1 ou 2,
**caractérisé en ce que**
on utilise un logiciel (8) de protection de données comme logiciel supplémentaire.

4. Procédé suivant l'une des revendications précédentes,
**caractérisé en ce que**
on utilise un logiciel (9, 10) extérieur comme logiciel supplémentaire.

5. Procédé suivant l'une des revendications précédentes,
**caractérisé en ce que**
avant le contrôle de type, on équipe le au moins un premier dispositif de données d'au moins un logiciel supplémentaire non pertinent du point de vue de la sécurité, de manière à séparer programme et données les uns des autres, des données de test ayant un code étant utilisées comme données, et
après le contrôle de type, on munit le au moins un premier dispositif de données dans le même programme de données en cours, en tirant parti du code après contrôle de la validité des données en cours.

6. Procédé suivant la revendication 5,
**caractérisé en ce que**
lorsqu'on utilise le logiciel supplémentaire, on contrôle la validité du code des données de ce logiciel supplémentaire, au moyen du logiciel pertinent du point de vue de la sécurité.

7. Procédé suivant l'une des revendications 5 ou 6,
**caractérisé en ce que**
pour la mise à jour du logiciel (8, 9, 10) supplémentaire, on munit le un premier dispositif (1) de données de données en cours par rapport à ce logiciel supplémentaire, en tirant parti du code sur un trajet indépendant du transfert des données en cours.

8. Procédé suivant l'une des revendications précédentes,
**caractérisé en ce que**
le système critique du point de vue de la sécurité est un système d'arrêt automatique des trains et on utilise, comme le au moins un premier dispositif de données, un ordinateur de fonctionnement, ainsi que l'on utilise un poste d'aiguillage comme dispositif de comparaison.
